# EUROPÄISCHE PATENTSCHRIFT

(11) **EP 1 220 997 B1**
(45) Veröffentlichungstag und Bekanntmachung des Hinweises auf die Patenterteilung: **02.04.2003**
(21) Anmeldenummer: 01943414.1
(22) Anmeldetag: 19.05.2001
(51) Int. Cl.: F16G 11/08, B23D 61/18

(54) **VERSCHLUSS FÜR EIN SEIL**
CABLE LOCK
FERMETURE DE CABLE

(30) Priorität: 24.05.2000 DE 20009255 U; 25.05.2000 DE 20009258 U
(43) Veröffentlichungstag der Anmeldung: 10.07.2002
(73) Patentinhaber: Steiner, Andreas, 5310 Tiefengraben (AT); Seidl, Roman, 5162 Obertrum (AT)
(72) Erfinder: Steiner, Andreas, 5310 Tiefengraben (AT); Seidl, Roman, 5162 Obertrum (AT)
(74) Vertreter: Ernicke, Hans-Dieter, Dipl.-Ing.
(86) Internationale Anmeldenummer: EP0105755
(87) Internationale Veröffentlichungsnummer: WO01090598

(56) Entgegenhaltungen:
- CH-A- 85 444
- DE-C- 37 657
- US-A- 2 036 172
- US-A- 3 100 323
- US-A- 4 652 166
- US-A- 5 718 216

## Beschreibung

Die Erfindung betrifft einen Verschluss für ein Seil, vorzugsweise für ein Sägeseil, mit den Merkmalen im Oberbegriff des Hauptanspruches.

Ein solcher Verschluss ist aus der CH-C-85 444 bekannt. Er ist als Kippverschluss ausgebildet und besteht aus zwei Kupplungsteilen mit einer Aufnahmehülse und einem Kugelkopf, die sich in einem lösbaren Formschluss miteinander verbinden lassen. Die Aufnahmehülse hat hierfür eine bereichsweise verengte Zugangsöffnung zum Einführen des Kugelkopfes und seines eingeschnürten Halses. Der Verschluss besitzt eine Verdrehsicherung, die als vorstehende Rippe am Hals des Kugelkopfes ausgebildet ist und die in die Stemmöffnung und in den Schlitzbereich der Zugangsöffnung der Aufnahmehülse formschlüssig greift. Diese Verdrehsicherung verhindert zwar die unerwünschten Verdrehungen um die längslaufende Seilachse bzw. Hülsenachse. Andererseits beschränkt sie jedoch die an sich gewünschten Kipp- oder Schwenkbewegungen des Kugelkopfes in der Hülse. Die Rippe am Hals sperrt nämlichdie Querbewegungen durch Ihre Anlage an den Hülsenwänden.

Aus der EP-A-0 680 395 ist ein anderer Sägeseilverschluss bekannt, der aus drei formschlüssig miteinander verbundenen Kupplungsteilen besteht, die mit zwei Gabelstücken, einem Zwischenstück und zwei gekreuzten Lagerstiften ein Kreuzgelenk bilden. Der Verschluss lässt sich nach der Montage in einigen Ausführungsformen nur noch durch Zerstören öffnen. Bei der lösbaren Variante kommen Schraubbolzen als Lagerstifte zum Einsatz, die einer besonderen und zusätzlichen Lösesicherung bedürfen. Dieser Stand der Technik bietet zwar die gewünschte Verdrehsicherung und lässt zugleich Schwenk- oder Kippbewegungen der Seilenden um die Kreuzgelenkachsen zu. Diese Vorteile werden jedoch mit einem erheblichen Bauund Kostenaufwand und einer erschwerten Handhabung beim Öffnen und Schließen des Verschlusses erkauft. Das Kreuzgelenk ist außerdem im Sägebetrieb erheblichen Belastungen ausgesetzt, was zu Schwierigkeiten bei der Betriebssicherheit führen kann.

Aus der US-A-4,652,166, der US-A-3,100,323 und der US-A-2,036,172 sind weitere zwei- und dreiteilige Seilverschlüsse bekannt, die jedoch keine axiale Verdrehsicherung besitzen und die im Fall der US-A-3,100,323 zudem noch die Schwenk- und Kippbewegungen der Sägeseilenden durch Formschluss verhindern.

Es ist Aufgabe der vorliegenden Erfindung, einen besseren Verschluss für ein Seil aufzuzeigen.

Die Erfindung löst diese Aufgabe mit den Merkmalen im Hauptanspruch.
Die erfindungsgemäße Ausführungsform der Verdrehsicherung hat den Vorteil, dass sie zwar einerseits die Verdrehungen um die Seil- bzw. Hülsenachse wirksam und zuverlässig verhindert, wobei sie andererseits aber ähnlich wie eine Kardanverbindung wirkt und rund um die Seil- bzw. Hülsenachse seitliche Schwenk- oder Kippbewegungen des mit dem Kopf verbundenen Kupplungsteiles erlaubt. Der Vorsprung der Verdrehsicherung wirkt durch seine Anordnung am Kopf und durch seine Ausbildung hierbei als eine Art Lager und erlaubt die vorerwähnten umlaufenden Kipp- oder Schwenkbewegungen.

Für eine optimierte Ausführung der Verdrehsicherung empfiehlt es sich, den Vorsprung zentral am Kopf anzuordnen und dadurch seine Längsachse gleichachsig mit der entsprechenden Kipp- oder Schwenkachse des-Kopfes zu machen. Um eine möglichst linienförmige Anlage des Vorsprunges an der Führungsöffnung der Aufnahmehülse zu erreichen, empfiehlt sich eine zylindrische Gestaltung des Stiftes.

In der bevorzugten Ausführungsform ist der Vorsprung oder Stift in verengten und schlitzförmigen Bereich der Zugangsöffnung führt. Diese Gestaltung erfordert den geringsten Bauaufwand. Alternativ ist es möglich, andere und insbesondere auch zusätzliche Führungsöffnungen zu schaffen.

Der Seilverschluss kann aus zwei, drei oder mehr Teilen bestehen. Bei einer dreiteiligen Ausführung sind die beiden Kopfteile vorzugsweise an den Seilenden befestigt und stehen mit einem als Hülsenteil ausgebildeten Zwischenstück in lösbarer Verbindung. Dies hat den Vorteil, dass das üblicherweise größerem Verschleiß unterliegende Hülsenteil oder Zwischenstück bei Bedarf leicht ausgewechselt werden kann. Die weniger verschleißbehafteten Kopfteile können dabei an den Seilenden verbleiben und brauchen nicht ausgetauscht zu werden. Dies spart im erheblichen Maße Montage- und Wartungsaufwand.

Bei einem dreiteiligen Verschluss sind an der Aufnahmehülse des Zwischenteils für die beiden Kopfteile zwei um 90° zueinander verdreht angeordnete Zugangsöffnungen vorhanden. Diese Anordnung hat den Vorteil, dass die axiale Verdrehsicherung mitsamt der Kardan-Kinematik erhalten bleibt. Die Kipp- und Schwenkachsen der beiden Köpfe erstrecken sich parallel zueinander. Außerdem bietet die verdrehte Öffnungsanordnung einen verbesserten Schutz gegen unerwünschtes Öffnen des Verschlusses.

In den Unteransprüchen sind weitere vorteilhafte Ausgestaltungen der Erfindung angegeben.

Die Erfindung ist in den Zeichnungen beispielsweise und schematisch dargestellt. Im einzelnen zeigen:
- Figur 1:: eine Draufsicht auf den Verschluss in axial fluchtender Betriebs- und Verschlussstellung mit abgebrochenen Seilenden,
- Figur 2:: einen Längsschnitt durch die Anordnung von Figur 1 gemäß Schnittlinie II-II,
- Figur 3:: eine perspektivische Ansicht des Kupplungsteils mit der Aufnahmehülse,
- Figur 4:: eine perspektivische Ansicht des Kupplungsteils mit dem runden Kopf,
- Figur 5 bis 7:: verschiedene Ansichten des Kupplungsteils mit der Aufnahmehülse im Längsschnitt und in den Ansichten gemäß Pfeil VI und Pfeil VII,
- Figur 8 bis 10:: verschiedene Ansichten des mit dem runden Kopf versehenen Kupplungsteils im Längsschnitt und in Ansichten gemäß Pfeil IX und X,
- Figur 11 und 12:: den Umfang der umlaufenden Kipp-und Schwenkwinkel des Verschlusses in den seitlichen Anschlagstellungen entsprechend Figur 1 und 2 und
- Figur 13:: eine Variante des Verschlusses mit einem Zwischenstück.

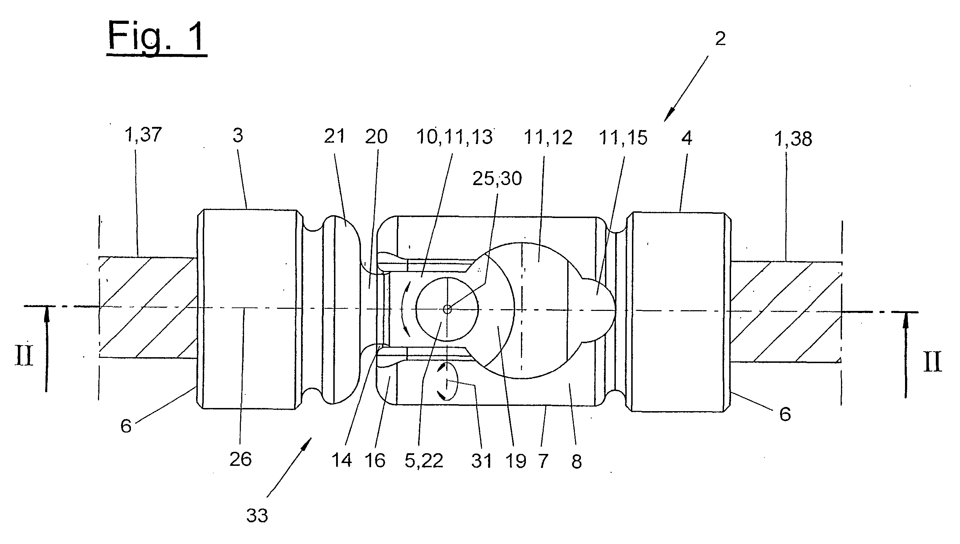

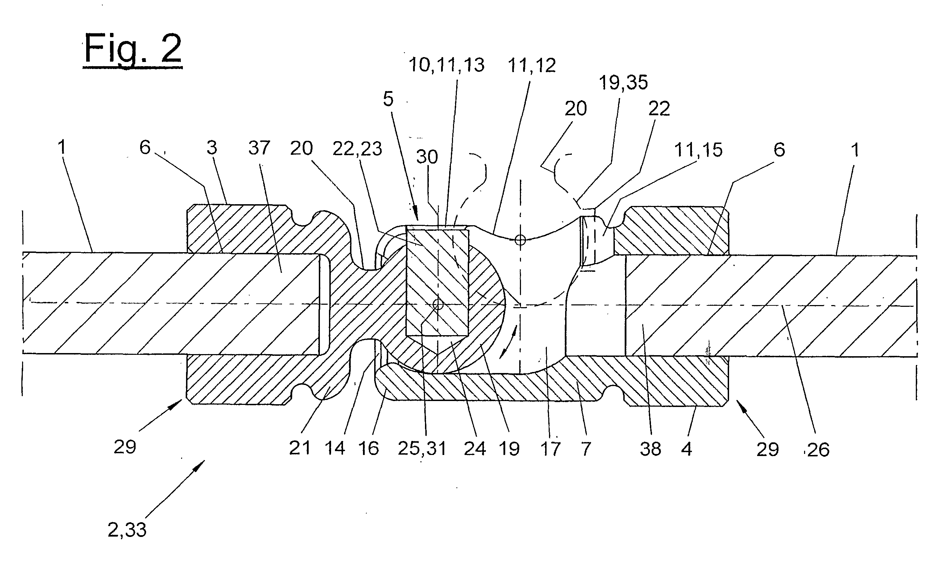

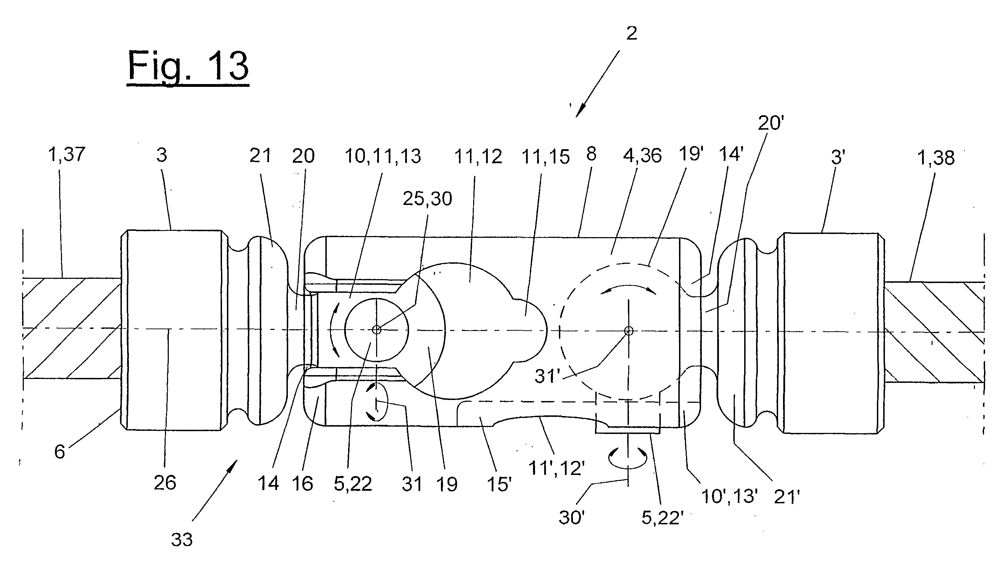

Figur 1 und 2 zeigen einen zweiteiligen Verschluss (2) für ein biegsames Seil (1), vorzugsweise ein Sägeseil, in der geschlossenen und axial fluchtenden Betriebsstellung (33) in Draufsicht und im Längsschnitt. In Figur 13 ist eine dreiteilige Variante des Verschlusses (2) dargestellt.

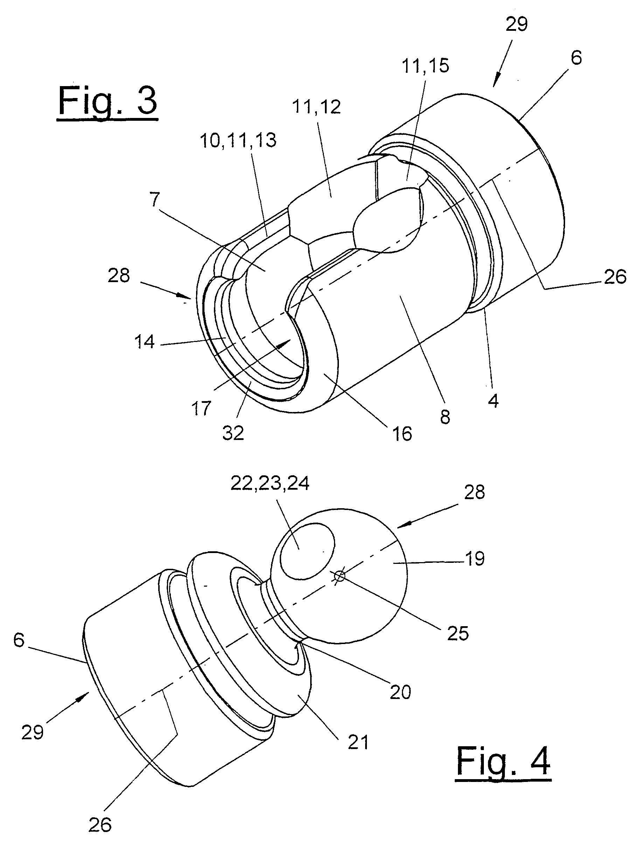

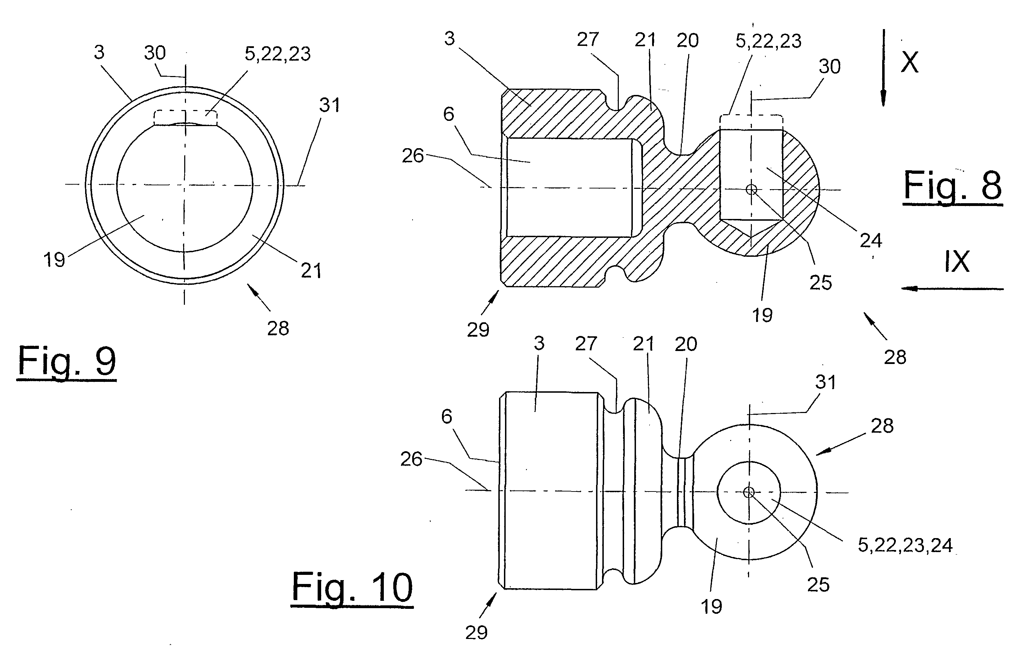

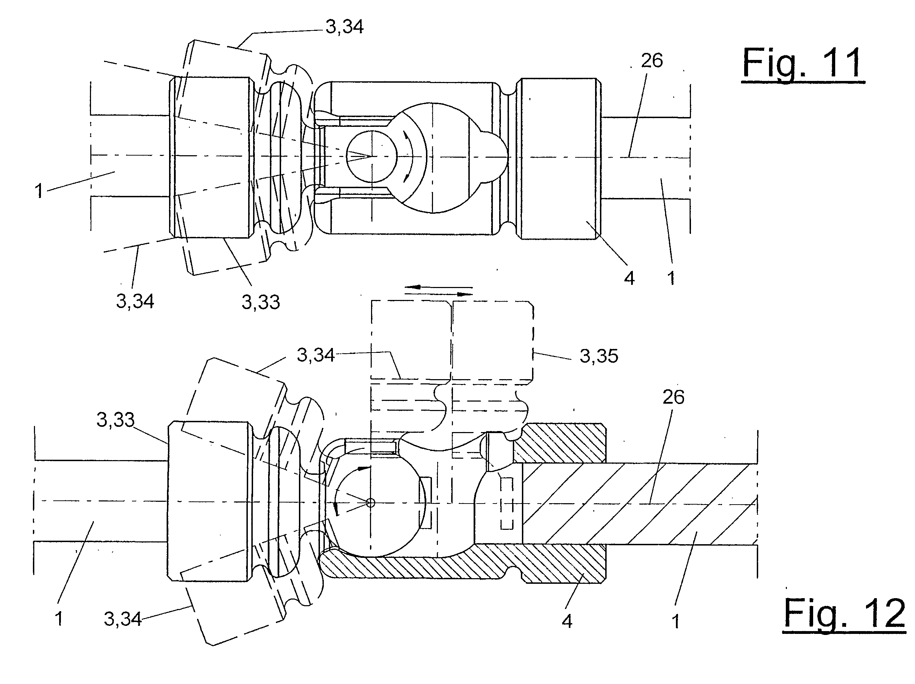

Der Verschluss (3) besteht in der einen gezeigten Ausführungsform von Figur 1 bis 12 aus zwei Kupplungsteilen (3,4), die lösbar miteinander verbunden werden können und die eine Verdrehsicherung (5) aufweisen, welche gegenseitige Verdrehungen der Kupplungsteile (3,4) und der Seilenden (37,38) um die Längsachse (26) des Seils (1) bzw. des Verschlusses (2) verhindert. Andererseits können die Kupplungsteile (3,4) im Betrieb auch gegenseitige Kipp- und Schwenkbewegungen um Achsen (30,31) quer zur Längsachse ausführen. Diese ausgelenkten Betriebs- und Anschlagstellungen (34) sind in Figur 11 und 12 dargestellt.

Die Kupplungsteile (3,4) haben an ihrer Rückseite (29) jeweils eine Seilaufnahme (6) für die beiden Enden des Seils (1). Diese Seilaufnahme (6) kann in beliebig geeigneter Weise ausgebildet sein. In der gezeigten Ausführungsform ist sie als Quetschhülse (6) gestaltet, die die Seilenden (37,38) im Klemmschluss aufnimmt. An den Kupplungsteilen (3,4) können außenseitige Ringnuten und entsprechende Wandschwächungen vorhanden sein, die etwa im Bereich der Vorderflächen der Seilenden (37,38) angeordnet sind.

Das Seil (1) ist in der gezeigten Ausführungsform als Sägeseil ausgebildet, welches von einer sogenannten Seilsäge (nicht dargestellt) umlaufen bewegt und angetrieben wird. Das Sägeseil (1) hat am Außenumfang in axialen Abständen eine Vielzahl von Abtragselementen, die das bearbeitete Material, z.B. Beton oder Stein, schleifend oder schneidend abtragen. Diese Elemente sind der Übersicht halber nicht dargestellt.

Das eine Kupplungsteil (3), welches nachfolgend als Kopfteil (3) bezeichnet wird, hat an der Vorderseite (28) einen runden Kopf (19), der vorzugsweise als Kugelkopf ausgebildet ist. Der Kopf (19) kann ansonsten auch eine ovale Form oder eine anders geartete runde Form aufweisen. Der Mittelpunkt (25) des Kopfes (19) befindet sich in den verschiedenen Betriebsstellungen (33,34) auf der Längsachse (26). An der Rückseite ist der Kopf (19) über einen verengten Hals (20) mit dem Kupplungsgehäuse und der Seilaufnahme (6) verbunden. Der Hals (20) besitzt einen im wesentlichen zylindrischen Querschnitt und erweitert sich zu einem Bund (21) an der Vorderseite der Seilaufnahme (6). Das Kopfteil (3) ist mit seinen Bestandteilen im wesentlichen rotationssymmetrisch bzgl. seiner Längsachse (26) ausgebildet, welche zugleich auch die Seilachse darstellt.

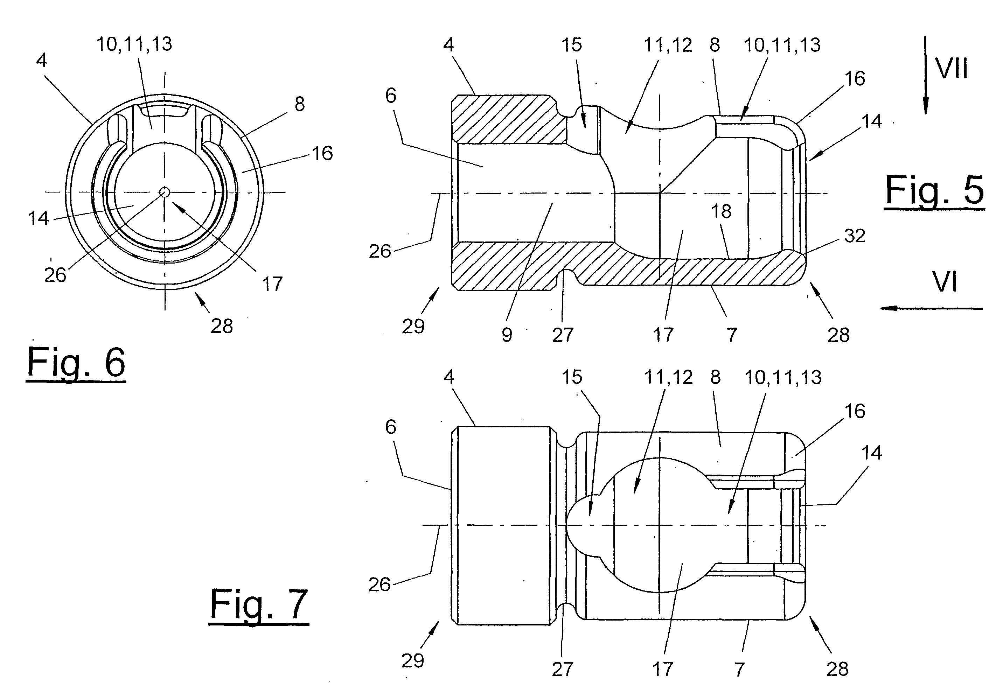

Das andere Kupplungsteil (4), welches nachfolgend als Hülsenteil (4) bezeichnet wird, besitzt eine Aufnahmehülse (7), die sich längs der Achse (26) erstreckt und die zur Aufnahme des Kopfes (19) dient. Die Aufnahmehülse (7) hat in ihrem Mantel (8) eine Zugangsöffnung (11). Diese teilt sich auf in eine rückwärtige breitere Rundöffnung (12) und einen daran anschließenden zur Vorderseite (28) hin verlaufenden, verengten axialen Schlitz (13) mit parallelen Wänden. An der Vorderseite (28) geht der Schlitz (13) in eine im wesentlichen kreisrunde Stirnöffnung (14) über, welche ebenfalls breiter als der Schlitz (13) ist. Die Stirnöffnung (14) ist vorzugsweise zentral zur Längsachse (26) angeordnet und quer zu dieser ausgerichtet. Sie kann am außenseitigen Rand trichterförmig sich erweiternde Fasen (32) haben. Eine solche Fase kann auch an der Randinnenseite vorhanden sein. Der Öffnungsrand kann ferner die in der Schnittdarstellung von Figur 5 gezeigte abgerundete Wulstform im Querschnitt haben.

Die Aufnahmehülse hat unterhalb der Zugangsöffnung (11) einen an die Form des Kopfes (19) angepassten Innenraum (17), der vorzugsweise im wesentlichen zylindrisch und mittensymmetrisch zur Längsachse (26) ausgebildet ist. An der Vorderseite (28) bildet der Mantel (8) einen ebenfalls der Kopfform angepassten Kragen (16), der vorzugsweise an der Innenseite eine kugelabschnittsförmig gewölbte Ringform hat. Der Innenraum (7) geht vorzugsweise rückseitig in die Quetschhülse (6) über und bildet mit dieser eine Durchgangsbohrung (9).

Beim Schließen des Verschlusses (2) wird der Kugelkopf (19) des um 90° aufgestellten Kopfteils (3) durch die Rundöffnung (12) in den Innenraum (17) eingeführt und zur Vorderseite (28) der Aufnahmehülse (7) und zum Kragen (16) hin bewegt. Der entsprechend schmale Hals (20) bewegt sich dabei durch den Schlitz (13) und gelangt dann in die Stirnöffnung (14). Der Kopf (19) wird dabei am Ende seiner Vorwärtsbewegung um seine Querachse (31) gedreht, so dass er die in Figur 1 und 2 gezeigte axiale Betriebs- und Verschlussstellung (33) einnimmt. In Figur 2 ist außerdem die anfängliche Einführstellung (35) gestrichelt dargestellt.

Der Verschluss (2) hat die eingangs erwähnte Verdrehsicherung (5). Diese besteht aus mindestens einem am Kopf (19) angeordneten Vorsprung (22), der eine lagerartige Ausbildung und Funktion hat und der in den Betriebsstellungen (33,34) formschlüssig in einer Führungsöffnung (10,13) an der Aufnahmehülse (7) geführt ist. In der einfachsten Ausführungsform bildet der Schlitz (13) diese Führungsöffnung (10). Alternativ kann aber auch eine zusätzliche und vorzugsweise axiale Führungsöffnung (10) am Boden (18) des Innenraumes (17) oder an dessen Seitenbereich in Form einer Nut angeordnet sein (nicht dargestellt). Zur Aufnahme des Vorsprungs (22) beim Einführen des aufgestellten Kopfes (19) in die Aufnahmehülse (7) besitzt die Rundöffnung (12) an der Rückseite (29) eine entsprechende Ausnehmung (15).

Der Vorsprung (22) ist vorzugsweise zentral am Kopf (19) angeordnet und steht radial vor. Seine Längsachse verläuft dabei durch den Mittelpunkt (25) des Kopfes (19) und fällt mit dessen Hochachse (30) zusammen. Der Vorsprung (22) ist vorzugsweise als im wesentlichen zylindrischer Stift (23) ausgebildet. Für dessen Aufnahme besitzt der Kopf (19) eine zentrale Aufnahmebohrung (24), in der der Stift (23) mit Klemmschluss, durch eine Klebeverbindung oder auf andere geeignete Weise gehalten ist.

Der Vorsprung (22) bzw. der Stift (23) hat eine Breite, die etwas kleiner als die Weite des Schlitzes (13) ist. Hierdurch ist der Vorsprung (22) bzw. der Stift (23) in den Betriebsstellungen (33,34) mit knappem seitlichen Spiel im Schlitz (13) geführt. Bei Auftreten von Torsionskräften schlägt er an den Schlitzwänden an und verhindert als Verdrehsicherung (5) die Seilverdrehung um die Längsachse (26). Das Spiel ist dabei vorzugsweise relativ klein, so dass der Vorsprung (22) möglichst schnell bei Torsionsbelastung anschlägt und nur geringe Drehbewegungen um die Längsachse (26) ausführt. Dieses Spiel ist allerdings Bemessungssache und kann auch größer gewählt werden.

Der Vorsprung (22) bildet eine Art kombiniertes Dreh- und Schiebelager für den Kopf (19). In den verschiedenen Betriebsstellungen (33,34) liegt der Kugelkopf (19) am Kragen (16) an, der diesen wie- ein Ringlager an der Vorderseite (28) formschlüssig umgibt und führt. Der Kopf (19) und das Kopfteil (3) können dabei in einem gewissen Maße kardanartig Schwenk- oder Kippbewegungen um die Hochund Querachse (30,31) ausführen. Diese Bewegungen können einander auch überlagern, so dass Schwenk- oder Kippbewegungen in unterschiedlichen Richtungen rund um die Stirnöffnung (14) möglich sind. Dementsprechend kann der Verschluss (2) um diese Achsen (30,31) einknicken. Seine Längssteifigkeit wird dadurch herabgesetzt und in etwa an die Seilbeweglichkeit angepasst.

Der Vorsprung (22) hat vorzugsweise an beiden Seiten im wesentlichen nur eine Linienberührung mit den Schlitzwänden. Dies ist für seine Lagerbildung vorteilhaft. Bei Auftreten von Querbelastungen kann der Kopf (19) um seine Hochachse (30) bzw. um die Längsachse des Vorsprungs (22) kippen oder schwenken. Figur 1 zeigt diese Beweglichkeit durch Pfeile. Der Kipp- oder Schwenkwinkel wird durch den Größenunterschied zwischen der Stirnöffnung (14) und dem dort hindurch ragenden Hals (20) bestimmt und durch Anschlag des Halses (20) am Öffnungsrand begrenzt.

Der Kopf (19) kann außerdem Schwenkbewegungen um die Querachse (31) ausführen, wobei sich der Vorsprung (22) axial entlang des Schlitzes (13) bewegen kann. Auch hier wird der Kipp- oder Schwenkwinkel nach unten durch den Rand der Stirnöffnung (14) bestimmt. Nach oben kann der Kipp- oder Schwenkwinkel in die aufrechte Stellung ca. 90° betragen. Figur 1, 2, 11 und 12 zeigen diese Beweglichkeit durch Pfeile.

Die Kipp- oder Schwenkwinkel betragen umlaufend mit Ausnahme vom Schlitzbereich (13) vorzugsweise ca. 25°. Der Hals (20) ist hierfür entsprechend ausgekehlt und wirkt in der Anschlagstellung (34) mit den entsprechend anlagegerecht ausgebildeten Fasen (32) am Rand der Stirnöffnung (14) zusammen. Figur 11 und 12 verdeutlichen den Bewegungsumfang durch gestrichelte Darstellung der Anschlagstellungen (34) der Kupplungsteile (3,4) gegenüber der mit Vollstrichen gezeichneten axial fluchtenden Betriebs- und Verschlussstellung (33). Außerdem ist in Figur 12 die Einführstellung (35) mit aufgerichtetem Kugelteil (3) dargestellt.

Das axiale Bewegungsspiel zwischen den Kupplungsteilen (3,4) kann beliebig groß sein. In der bevorzugten Ausführungsform hat der Hals (20) eine Länge, die geringfügig größer als die Mantel- oder Kragendicke der Aufnahmehülse (7) im Bereich der Stirnöffnung (14) bzw. des Schlitzes (13) ist. Die Halslänge ist andererseits kürzer als der axiale Verschiebeweg des Kopfes (19) zwischen der vorderen axial fluchtenden Betriebsstellung (33) und der rückwärtigen Einführstellung (35) in der Aufnahmehülse (7). Hierdurch kann der Kopf (19) nicht durch eine axiale Relativbewegung zwischen den Kupplungsteilen (3,4) in den Bereich der Rundöffnung (12) gelangen und dort nach außen rutschen. Ein Öffnen des Verschlusses (2) ist nur durch ein Aufstellen und Verschwenken des Kopfes (19) um 90° und eine anschließende axiale Rückwärtsbewegung bis zur Rundöffnung (12) möglich. Auf diese Weise wird ein versehentliches Öffnen des Verschlusses (2) zuverlässig verhindert.

Im Ausführungsbeispiel von Figur 13 ist ein dreiteiliger Verschluss (2) dargestellt. Er besteht in der bevorzugten Ausführungsform aus zwei Kopfteilen (3,3') der vorbeschriebenen Art, die jeweils mit einem Seilende (37,38) verbunden sind. Die beiden Kopfteile (3,3') werden durch ein Zwischenstück (36) miteinander verbunden, welches als beidseitig wirksames Hülsenteil (4) ausgebildet ist.

Das Zwischenstück (36) hat zwei Zugangsöffnungen (11,11') der vorbeschriebenen Art, die zueinander um 90° bzgl. der Längsachse (26) verdreht angeordnet sind. Dementsprechend sind auch die Vorsprünge (22,22') zueinander um 90° verdreht angeordnet. Bei dieser Gestaltung erstreckt sich die Hochachse (30) des einen Kopfteils (3) parallel zur Querachse (31') des zweiten Kopfteils (3'). Dementsprechend verläuft auch die Querachse (31) des einen Kopfteils (3) parallel zur Hochachse (30') des anderen Kopfteils (3').

Die Zugangsöffnung (11') ist in der vorbeschriebenen Art ausgebildet und besitzt eine als Schlitz (13') gestaltete Führungsöffnung (10'), eine Rundöffnung (12') und eine Ausnehmung (15'). Ferner hat das Zwischenstück (36) an beiden stirnseitigen Enden zwei miteinander fluchtende Stirnöffnungen (14,14'), die entsprechend auf den Durchmesser der Hälse (20,20') der Kopfteile (3,3') ausgebildet sind. Die beiden Kopfteile (3,3') sind in ihren Ausgestaltungen und Abmessungen vorzugsweise gleich. Dies gilt auch für die Formgebung und Größe der Zugangsöffnungen (11,11') und ihrer Einzelteile.

Die Länge des Zwischenstücks (36) kann unterschiedlich bemessen sein. In der gezeigten Ausführungsform überlappen einander die um 90° verdrehten Zugangsöffnungen (11,11') in Richtung der Längsachse (26). Hierdurch wird die Länge des Hülsenteils (4) verkürzt. Die Ausnehmungen (15,15') enden dabei jeweils mit kleinem Abstand vor dem benachbarten Kopf (19,19') des jeweils anderen Kopfteils (3,3'). Hierdurch können die Kopfteile (3,3') nacheinander eingehängt werden, wobei das erste Kopfteil (3,3') nach dem Einhängen in die axial fluchtende Betriebsstellung (33) gebracht wird. In dieser Position kann dann das andere Kopfteil (3',3) eingehängt werden, wobei sein Vorsprung (22',22) den anderen Kopf (19,19') mit ausreichend Freiraum passieren kann.

Abwandlungen der gezeigten Ausführungsformen sind in verschiedener Weise möglich. Zum einen kann der Verschluss (2) mehr als drei Kupplungsteile (3,3',4,36) beinhalten. Hierbei kann z.B. das Zwischenstück (36) oder Hülsenteil (4) mehrteilig ausgebildet sein und ein eingebautes Gelenk mit einer Verdrehsicherung um die Seilachse (26) haben. Zudem ist auch eine umgekehrte Zuordnung der Kupplungsteile (3,3',4,36) möglich, indem an den Seilenden (37,38) jeweils zwei Hülsenteile (4) der in Figur 1 bis 12 beschriebenen Art angeordnet sind, wobei das Zwischenstück (36) zwei einander gegenüberliegende Kopfteile (3,3') aufweist. Auch hier kann dieses Zwischenstück in sich gelenkig ausgebildet sein.

In einer weiteren Variante könnte die Führungsöffnung (10) als eine Art Bajonettführung an der Innenseite des Mantels (8) ausgebildet sein, wobei auch die Ausnehmung (15) für den Vorsprung (22) entsprechend anders angeordnet sein kann. Ferner kann der Vorsprung (22) noppenförmig mit einer abgerundeten Oberseite oder auf beliebige andere geeignete Weise gestaltet sein. Am Kopf (19) kann auch mehr als ein Vorsprung (22) angeordnet sein. Beispielsweise könnten zwei gegenüber liegende Vorsprünge vorhanden sein, wobei im Boden des Innenraums (17) eine zusätzliche Führungsnut zur Aufnahme des zweiten Vorsprungs vorhanden wäre.

### BEZUGSZEICHENLISTE

- 1: Seil, Sägeseil
- 2: Verschluss
- 3: Kupplungsteil, Kopfteil
- 3': Kupplungsteil, Kopfteil
- 4: Kupplungsteil, Hülsenteil
- 5: Verdrehsicherung
- 6: Seilaufnahme, Quetschhülse
- 7: Aufnahmehülse
- 8: Mantel
- 9: Durchgangsbohrung
- 10: Führungsöffnung
- 10': Führungsöffnung
- 11: Zugangsöffnung
- 11': Zugangsöffnung
- 12: Rundöffnung
- 12': Rundöffnung
- 13: Schlitz
- 13': Schlitz
- 14: Stirnöffnung
- 14': Stirnöffnung
- 15: Ausnehmung
- 15': Ausnehmung
- 16: Kragen
- 17: Innenraum
- 18: Boden
- 19: Kopf, Kugelkopf
- 19': Kopf, Kugelkopf
- 20: Hals
- 20': Hals
- 21: Bund; Verbreiterung
- 21': Bund, Verbreiterung
- 22: Vorsprung
- 22': Vorsprung
- 23: Stift
- 24: Aufnahmebohrung
- 25: Mittelpunkt
- 26: Längsachse, Seilachse
- 27: Ringnut
- 28: Vorderseite
- 29: Rückseite
- 30: Hochachse
- 30': Hochachse
- 31: Querachse
- 31': Querachse
- 32: Fase
- 33: Betriebsstellung, axial fluchtend
- 34: Betriebsstellung, Anschlagstellung
- 35: Einführstellung
- 36: Kupplungsteil, Zwischenstück
- 37: Seilende
- 38: Seilende

## Patentansprüche

1. Verschluss für ein Seil, vorzugsweise ein Sägeseil, bestehend aus mindestens zwei Kupplungsteilen (3,3',4,36), die sich in einem lösbaren Formschluss miteinander verbinden lassen und die eine Verdrehsicherung (5) um die Seilachse (26) aufweisen, wobei das eine Kupplungsteil (3,3') einen runden Kopf (19,19') mit einem eingeschürten Hals (21) und das andere Kupplungsteil (4,36) eine passende Aufnahmehülse (7) mit mindestens einer zumindest bereichsweise verengten Zugangsöffnung (11,11') für den Kopf (19,19') aufweist, **dadurch gekennzeichnet, dass** die Verdrehsicherung (5) als mindestens ein am Kopf (19,19') angeordneter lagerartiger Vorsprung (22,22') ausgebildet ist, der in Betriebsstellung (33,34) formschlüssig in einer Führungsöffnung (10,10',13,13') an der Aufnahmehülse (7) geführt ist.

2. Verschluss nach Anspruch 1, **dadurch gekennzeichnet, dass** der Verschluss zweiteilig mit einem Kopfteil (3) und einem Hülsenteil (4) ausgebildet ist, wobei das Kopfteil (3) am einen Seilende (37) und das Hülsenteil (4) am anderen Seilende (38) angeordnet sind.

3. Verschluss nach Anspruch 1, **dadurch gekennzeichnet, dass** der Verschluss mindestens dreiteilig ausgebildet ist und zwei Kopfteile (3,3') und mindestens ein beidseitig anschließbares hülsenförmiges Zwischenteil (36) aufweist, wobei die Kopfteile (3,3') an den beiden Seilenden (37,38) angeordnet sind.

4. Verschluss nach Anspruch 1, 2 oder 3, **dadurch gekennzeichnet, dass** der Vorsprung (22,22') zentral am Kopf (19,19') angeordnet ist und radial vorsteht.

5. Verschluss nach einem der vorhergehenden Ansprüche, **dadurch gekennzeichnet, dass** der Vorsprung (22,22') als im wesentlichen zylindrischer Stift (23) ausgebildet ist, wobei der Kopf (19,19') eine zentrale Aufnahmebohrung (24) für den Stift (23) aufweist

6. Verschluss nach einem der vorhergehenden Ansprüche, **dadurch gekennzeichnet, dass** der Kopf (19,19') eine im wesentlichen kugelförmige Gestalt aufweist.

7. Verschluss nach einem der vorhergehenden Ansprüche, **dadurch gekennzeichnet, dass** die Aufnahmehülse (7) des Zwischenteils (36) am Mantel (8) zwei um 90° zueinander verdreht angeordnete Zugangsöffnungen (11,11') für die Köpfe (19,19') der beiden Kopfteile (3,3') aufweist.

8. Verschluss nach einem der vorhergehenden Ansprüche, **dadurch gekennzeichnet, dass** die Zugangsöffnung(en) (11,11') der Aufnahmehülse (7) eine breitere Rundöffnung (12,12') für den Kopf (19,19') mit einer rückwärtigen Ausnehmung (15,15') für den Vorsprung (22,22') und frontseitig einen verengten Schlitz (13,13') aufweist.

9. Verschluss nach einem der vorhergehenden Ansprüche, **dadurch gekennzeichnet, dass** der Vorsprung (22,22') in Betriebsstellung (33,34) formschlüssig mit knappem seitlichem Spiel im Schlitz (13,13') geführt ist.

10. Verschluss nach einem der vorhergehenden Ansprüche, **dadurch gekennzeichnet, dass** der Kopf (19,19') einen axial anschließenden verengten und durch den Schlitz (13,13') passenden Hals (20,20') mit einem im wesentlichen kreisrunden Querschnitt aufweist, der in einen verbreiterten Bund (21,21') übergeht.

11. Verschluss nach einem der vorhergehenden Ansprüche, **dadurch gekennzeichnet, dass** die Zugangsöffnung (11,11') frontseitig eine Stirnöffnung (14,14') für den Hals (20,20') aufweist, deren Durchmesser deutlich größer als der Halsdurchmesser ist.

12. Verschluss nach einem der vorhergehenden Ansprüche, **dadurch gekennzeichnet, dass** der Hals (20,20') eine Länge aufweist, die im wesentlichen der Manteldicke der Aufnahmehülse (7) im Bereich der Stirnöffnung (14,14') entspricht.

13. Verschluss nach einem der vorhergehenden Ansprüche, **dadurch gekennzeichnet, dass** der Innenraum (17) der Aufnahmehülse (7) den Kopf (19,19') in Betriebsstellung (33,34) außenseitig dicht umschließt und den Kopf (19,19') axial sowie frontal im Bereich der Stirnöffnung (14,14') führt.

## Claims

1. Fastener for a wire, preferably a sawing wire, consisting of at least two coupling parts (3, 3', 4, 36) which can be connected to one another in a releasable form grip and which have an anti-rotation locking means (5) about the wire axis (26), the one coupling part (3, 3') having a round head (19, 19') with a constricted neck (21), and the other coupling part (4, 36) having a matching locating sleeve (7) with at least one access opening (11, 11'), at least a region of which is narrowed, for the head (19, 19'), **characterized in that** the anti-rotation locking means (5) is designed as at least one bearing-like projection (22, 22') which is arranged on the head (19, 19') and which, in the operating position, is guided in a positive-locking manner in a guide opening (10, 10', 13, 13') on the locating sleeve (7).

2. Fastener according to Claim 1, **characterized in that** the fastener is designed in two parts with a head part (3) and a sleeve part (4), the head part (3) being arranged on one wire end (37) and the sleeve part (4) being arranged on the other wire end (38).

3. Fastener according to Claim 1, **characterized in that** the fastener is designed in at least three parts and has two head parts (3, 3') and at least one sleeve-shaped intermediate part (36) which can be connected on both sides, the head parts (3, 3') being arranged on the two wire ends (37, 38).

4. Fastener according to Claim 1, 2 or 3, **characterized in that** the projection (22, 22') is arranged centrally on the head (19, 19') and projects radially.

5. Fastener according to one of the preceding claims, **characterized in that** the projection (22, 22') is designed as an essentially cylindrical pin (23), the head (19, 19') having a central locating hole (24) for the pin (23).

6. Fastener according to one of the preceding claims, **characterized in that** the head (19, 19') has an essentially spherical form.

7. Fastener according to one of the preceding claims, **characterized in that** the locating sleeve (7) of the intermediate part (36), on the lateral surface area (8), has two access openings (11, 11') arranged so as to be rotated by 90° relative to one another and intended for the heads (19, 19') of the two head parts (3, 3').

8. Fastener according to one of the preceding claims, **characterized in that** the access opening(s) (11, 11') of the locating sleeve (7) has a wider round opening (12, 12') for the head (19, 19'), with a rear recess (15, 15') for the projection (22, 22') and a narrowed slot (13, 13') on the front side.

9. Fastener according to one of the preceding claims, **characterized in that** the projection (22, 22'), in the operating position (33, 34), is guided in a positive-locking manner with tight lateral clearance in the slot (13, 13').

10. Fastener according to one of the preceding claims, **characterized in that** the head (19, 19') has an axially adjoining narrowed neck (20, 20') fitting through the slot (13, 13') and having an essentially circular cross section which merges into a widened collar (21, 21').

11. Fastener according to one of the preceding claims, **characterized in that** the access opening (11, 11') has an end opening (14, 14') on the front side for the neck (20, 20'), the diameter of this end opening (14, 14') being markedly larger than the neck diameter.

12. Fastener according to one of the preceding claims, **characterized in that** the neck (20, 20') has a length which essentially corresponds to the thickness of the lateral surface area of the locating sleeve (7) in the region of the end opening (14, 14').

13. Fastener according to one of the preceding claims, **characterized in that** the interior space (17) of the locating sleeve (7) tightly encloses the head (19, 19') on the outside in the operating position (33, 34) and guides the head (19, 19') axially and frontally in the region of the end opening (14, 14').

## Revendications

1. Dispositif de blocage d'un câble, de préférence d'un câble de fil, constitué d'au moins deux parties (3, 3', 4, 36) de couplage qui peuvent être reliées ensemble suivant une liaison amovible, à complémentarité de formes et qui ont un dispositif (5) empêchant une torsion autour de l'axe (26) du câble, l'une des parties (3, 3') de couplage ayant une tête (19, 19') arrondie à col (21) rétréci, tandis que l'autre partie (4, 36) de couplage a une douille (7) adaptée de réception ayant au moins une ouverture (11, 11') au moins resserrée par endroit d'accès pour la tête (19, 19'), **caractérisé en ce que** le dispositif (15) empêchant la torsion est constitué sous la forme d'au moins une saillie (22, 22') qui est à la manière d'un palier disposé sur la tête (19, 19'), et qui, en position (33, 34) de fonctionnement est guidée sur la douille (7) de réception à complémentarité de formes dans une ouverture (10, 10', 13, 13') de guidage.

2. Dispositif de blocage suivant la revendication 1, **caractérisé en ce que** le dispositif de blocage est constitué en deux parties ayant une partie (3) de tête et une partie (4) de douille, la partie (3) de tête étant disposée à une extrémité (37) d'un câble et la partie (4) de douille à l'autre extrémité (38) du câble.

3. Dispositif de blocage suivant la revendication 1, **caractérisé en ce que** le dispositif de blocage est constitué d'au moins trois parties et a deux parties (3, 3') de tête et au moins une partie (36) intermédiaire en forme de douille pouvant se raccorder des deux côtés, les parties (3, 3') de tête étant disposées aux deux extrémités (37, 38) du câble.

4. Dispositif de blocage suivant la revendication 1, 2 ou 3, **caractérisé en ce que** la saillie (22, 22') est disposée centralement sur la tête (19, 19') et fait saillie radialement.

5. Dispositif de blocage suivant l'une des revendications précédentes, **caractérisé en ce que** la saillie (22, 22') est constituée en broche (23) sensiblement cylindrique, la tête (19, 19') ayant un perçage (24) central de réception de la broche (23).

6. Dispositif de blocage suivant l'une des revendications précédentes, **caractérisé en ce que** la tête (19, 19') a une forme sensiblement sphérique.

7. Dispositif de blocage suivant l'une des revendications précédentes, **caractérisé en ce que** la douille (7) de réception de la partie (36) intermédiaire a sur la surface (8) latérale deux ouvertures (11, 11') décalées de 90° l'une par rapport à l'autre auxquelles ont accès les têtes (19, 19') des deux parties (3, 3') de tête.

8. Dispositif de blocage suivant l'une des revendications précédentes, **caractérisé en ce que** les ouvertures (11, 11') d'accès de la douille (7) de réception ont une ouverture (12, 12') arrondie assez large pour la tête (19, 19') ayant un évidement (15, 15') arrière pour la saillie (22, 22') et du côté avant une fente (13, 13') resserrée.

9. Dispositif de blocage suivant l'une des revendications précédentes, **caractérisé en ce que** la saillie (22, 22') est guidée en position (33, 34) de fonctionnement à complémentarité de formes avec un petit jeu latéral dans la fente (13, 13').

10. Dispositif de blocage suivant l'une des revendications précédentes, **caractérisé en ce que** la tête (19, 19') a un col (20, 20') resserré en se raccordant axialement, s'adaptant dans la fente (13, 13') et de section transversale sensiblement circulaire qui se transforme en un collet (21, 21') élargi.

11. Dispositif de blocage suivant l'une des revendications précédentes, **caractérisé en ce que** les ouvertures (11, 11') d'accès ont du côté avant une ouverture (14, 14') frontale pour le col (20, 20') dont le diamètre est nettement plus grand que le diamètre du col.

12. Dispositif de blocage suivant l'une des revendications précédentes, **caractérisé en ce que** le col (20, 20') a une longueur qui correspond sensiblement à l'épaisseur de la surface latérale de la douille (7) de réception dans la zone de l'ouverture (14, 14') avant.

13. Dispositif de blocage suivant l'une des revendications précédentes, **caractérisé en ce que** l'intérieur (17) de la douille (7) de réception entoure étroitement du côté extérieur la tête (19, 19') en position (33, 34) de fonctionnement et guide la tête (19, 19') axialement ainsi que frontalement dans la zone de l'ouverture (14, 14') avant.
